# EUROPEAN PATENT SPECIFICATION

(11) **EP 3 543 816 B1**
(45) Date of publication and mention of the grant of the patent: **23.12.2020**
(21) Application number: 17871389.7
(22) Date of filing: 13.11.2017
(51) Int. Cl.: G05D 1/10, G05D 1/02, G05D 1/00

(54) **CONTROL SYSTEM, CONTROL METHOD, AND PROGRAM**
STEUERUNGSSYSTEM, STEUERUNGSVERFAHREN UND PROGRAMM
SYSTÈME DE COMMANDE, PROCÉDÉ DE COMMANDE ET PROGRAMME

(30) Priority: 18.11.2016 JP 2016224693
(43) Date of publication of application: 25.09.2019
(73) Proprietor: NEC Corporation, Tokyo 108-8001 (JP)
(72) Inventor: ICHIEN Masumi, Tokyo 108-8001 (JP); OGAWA Masatsugu, Tokyo 108-8001 (JP); EMURA Masafumi, Tokyo 108-8001 (JP)
(74) Representative: Betten & Resch
(86) International application number: PCT/JP2017/040674
(87) International publication number: WO 2018/092699

(56) References cited:
- WO-A1-2015/171593
- JP-A- 2008 217 150
- JP-A- 2011 048 736
- US-A1- 2014 018 979
- US-A1- 2015 168 166

## Description

### [Technical Field]

The present invention relates to a control system, a control method, and a program, which are for controlling a group of unmanned crafts.

### [Background Art]

There is a trend of arranging and controlling a plurality of unmanned crafts mounted with information acquisition devices such as a sensor and a camera, and utilizing the unmanned crafts for performing an efficient and secure operation in a specific area. For example, conceivably, an unmanned flying aircraft mounted with a camera is applied to a field of performing a search or monitoring in an area where a human has difficulty in entering, such as a disaster occurrence area and a vast region. In order to achieve such application, it is required that the unmanned crafts are optimally arranged in consideration of operation efficiency.

PTL 1 discloses a group-behavior command generation device capable of generating control amounts for a plurality of moving robots at a high speed by expressing a command from an operator in a distribution and using an interactive associative storage. The device in PTL 1 converts a general command from an operator into a distribution of numerical values, expresses a current situation of each robot as a distribution of numerical values from a sensor or the like, and causes each unmanned craft to calculate a numerical value of control amounts at a high speed for reflecting the command from the operator.

NPL 1 discloses a technology for controlling arrangement of unmanned crafts autonomously based on sensing information acquired by sensors mounted on the unmanned crafts. In the method in NPL 1, each unmanned craft functions as a relay point of a wireless network, and achieve a broad communication area while sensing situations of wireless signals transmitted from the other unmanned crafts.

US 2015/168166 A1 discloses a server apparatus for controlling electronic devices.

### [Citation List]

### [Patent Literature]

[PTL 1] Japanese Unexamined Patent Application Publication No. H9-54602

### [Non Patent Literature]

[NPL 1] Jerome Le Ny, George J. Pappas, "Sensor-Based Robot Deployment Algorithms", 49th IEEE Conference on Decision and Control, 2010, pp.5486-5492

### [Summary of Invention]

### [Technical Problem]

With the device in PTL 1, an operator is required to take a leading role to control each robot, and hence, the operator is required to determine and issue a control command in consideration of a situation and efficiency of a performed operation at all times. Thus, the device in PTL 1 has a problem that a burden on the operator is large.

With the autonomous arrangement control as in NPL 1, a burden on an operator is alleviated because a logic for the arrangement control is installed in the unmanned craft in advance for performing autonomous control. However, with the method in NPL 1, in some cases, arrangement control in consideration of highly prioritized areas and points based on human experience and intuition may be required, or control that cannot be performed only with sensing information from the unmanned craft may be required. In those cases, the method in NPL 1 cannot flexibly change operations caused by control in consideration of a command from an operator only with the autonomous control by the unmanned craft.

In other words, PTL 1 and NPL 1 have a problem that an unmanned craft group cannot behave autonomously while following changes of peripheral situations in consideration of a command from an operator. This is because, in PTL 1 and NPL 1, information on a command from an operator and information for autonomous behavior generated by the unmanned craft are not associated with each other.

An object of the present invention is to solve the above-mentioned problems and to provide a control system that achieves an operation in which an unmanned craft group behaves autonomously by following situation changes while reflecting a command from an operator when unmanned crafts are arranged and controlled autonomously in a specific area.

### [Solution to Problem]

A control system, a control method and a program are defined by claims 1, 8 and 9.

### [Advantageous Effects of Invention]

According to the present invention, it is possible to provide a control system that achieves an operation in which an unmanned craft group behaves autonomously by following situation changes while reflecting a command from an operator when the unmanned crafts are arranged and controlled autonomously in a specific area.

### [Brief Description of Drawings]

Fig. 1 is a conceptual diagram for illustrating an example of a configuration of an unmanned craft group control system according to a first example embodiment of the present invention.
Fig. 2 is a flowchart for illustrating an example of an operation in which a control device delivers calculated designated-area priority to unmanned crafts in the unmanned craft group control system according to the first example embodiment of the present invention.
Fig. 3 is a conceptual diagram for illustrating an example of a method of inputting a prioritized area in the unmanned craft group control system according to the first example embodiment of the present invention.
Fig. 4 is a flowchart for illustrating an example of an operation regarding arrangement control of the unmanned crafts in the unmanned craft group control system according to the first example embodiment of the present invention.
Fig. 5 is a conceptual diagram for illustrating a method of calculating detected area-priority, which is performed by the unmanned crafts of the unmanned craft group control system according to the first example embodiment of the present invention.
Fig. 6 is a conceptual diagram for illustrating a method of calculating integrated area-priority, which is performed by the unmanned crafts of the unmanned craft group control system according to the first example embodiment of the present invention.
Fig. 7 is a conceptual diagram for illustrating an example of a configuration of an unmanned craft group control system according to a second example embodiment of the present invention.
Fig. 8 is a flowchart for illustrating an example of an operation in which a control device stores calculated designated-area priority in the control device in the unmanned craft group control system according to the second example embodiment of the present invention.
Fig. 9 is a flowchart for illustrating an example of an operation in which the control device of the unmanned craft group control system according to the second example embodiment of the present invention acquires sensing information from each unmanned craft.
Fig. 10 is a flowchart for illustrating an example of an operation in which the control device of the unmanned craft group control system according to the second example embodiment of the present invention performs arrangement control of each unmanned craft.
Fig. 11 is a conceptual diagram for illustrating an example of a configuration of an unmanned craft group control system according to a third example embodiment of the present invention.
Fig. 12 is a conceptual diagram for illustrating an example of a computer that achieves control system of the unmanned craft group control system according to each example embodiment of the present invention.

### [Example Embodiment]

Now, with reference to the drawings, description is made on example embodiments of the present invention. In the example embodiments described below, limitations technically preferred for carrying out the present invention are given, but the scope of the present invention is not limited to the following. Note that, in all the drawings referred in the description of the example embodiments below, similar components are denoted with the same symbols unless otherwise specified. Further, in the following example embodiments, repeated description for similar configurations and operations may be omitted in some cases. Further, the orientations of the arrows in the drawings are merely examples, and do not limit the directions of the signals between the blocks.

### (First Example Embodiment)

### (Configuration)

First, with reference to the drawings, description is made on a configuration of an unmanned craft group control system (also referred to as a control system) according to a first example embodiment of the present invention. The unmanned craft group control system according to this example embodiment is configured to control at least one unmanned craft arranged in a specific area.

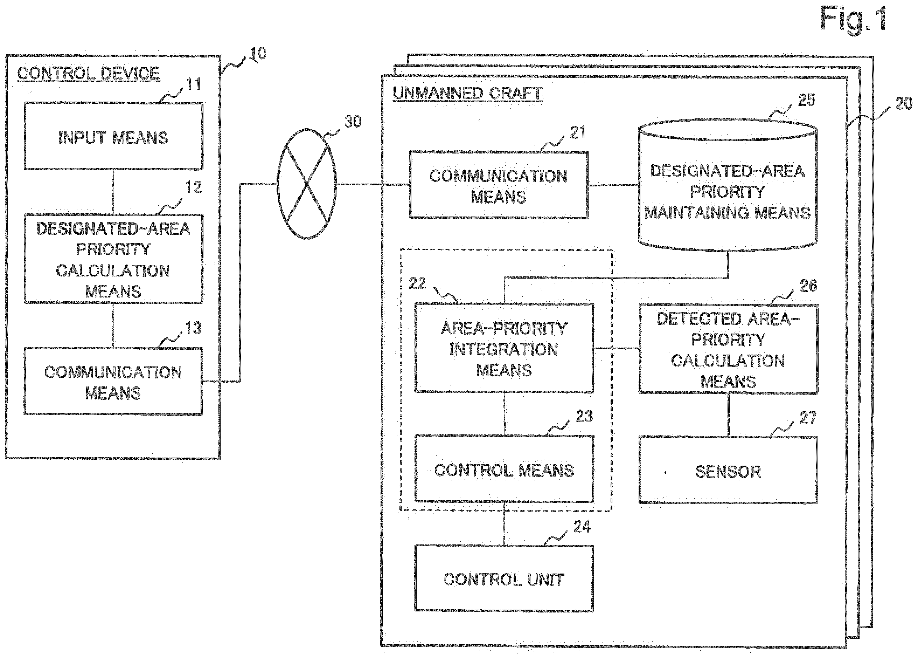

Fig. 1 is a conceptual diagram for illustrating a configuration of the unmanned craft group control system according to this example embodiment. The unmanned craft group control system according to this example embodiment has a configuration in which a control device 10 and an unmanned craft group, which includes at least one unmanned craft 20, are connected to each other via a communication network 30.

Note that the number of unmanned crafts 20 included in the unmanned craft control system according to this example embodiment is not limited. Further, the communication network 30 is a channel to be used for transmitting information between the control device 10 and the unmanned crafts 20. The communication network 30 may be included in the configuration of the present invention in the case of a dedicated line, and may not be included in the configuration of the present invention in the case of a public line such as the Internet.

The control device 10 receives information on a prioritized area, which is inputted by an operator. Further, the control device 10 converts the information on the prioritized area, which is inputted by the operator, into numerical values, and delivers the numerical values to each unmanned craft 20. Note that the information on the prioritized area, which is inputted by the operator, corresponds to priority of an area that is externally designated.

The unmanned craft 20 receives, from the control device 10, the information obtained by converting the information on the prioritized area, which is inputted by the operator, into the numerical values. While following the information, the unmanned craft 20 controls an arrangement of the own craft autonomously by acquiring sensing information from a sensor 27 in accordance with the operation.

### [Control Device]

As illustrated in Fig. 1, the control device 10 includes an input means 11, a designated-area priority calculation means 12, and a communication means 13.

The input means 11 receives input of the information on the prioritized area from the operator. For example, the input means 11 is achieved by a graphical input interface through which points are inputted in a drawing of the specific area. For example, the input means 11 receives designation of the prioritized area through the interface that displays the specific area divided into a plurality of sub-areas.

The designated-area priority calculation means 12 converts the inputted information of the prioritized area into numerical values (designated-area priority). For example, the designated-area priority calculation means 12 calculates the designated-area priority for each sub-area designated through the input means 11.

The communication means 13 (also referred to as a control-side communication means) performs information communication with the unmanned craft 20 via the communication network 30.

### [Unmanned Craft]

As illustrated in Fig. 1, the unmanned craft 20 includes a communication means 21, an area-priority integration means 22, a control means 23, control unit 24, a designated-area priority maintaining means 25, a detected area-priority calculation means 26, and a sensor 27.

the communication means 21 (also referred to as an unmanned craft-side communication means) performs information communication with the control device 10 via the communication network 30. The communication means 21 may communicate with the control device 10 wirelessly, or may communicate with the control device 10 through wires. Practically, the case of wireless communication between the control device 10 and the unmanned craft 20 is assumed.

The area-priority integration means 22 integrates the designated-area priority, which is delivered from the control device 10 to each of the unmanned craft 20, and detected area-priority, which is calculated by each of the unmanned craft 20. The area-priority integration means 22 then calculates area priority that is integrated (hereinafter, referred to as an integrated area-priority). For example, the area-priority integration means 22 calculates the integrated area-priority for each sub-area by integrating the designated-area priority, which is calculated by the designated-area priority calculation means 12, and detected area-priority, which is calculated by the detected area-priority calculation means 26.

Based on the integrated area-priority, the control means 23 calculates a control amount for determining the arrangement of the own craft in the specific area. The control means 23 outputs a control signal, which contains information on the calculated control amount, to the control unit 24.

The control unit 24 is an equipment for changing the arrangement of the unmanned craft 20. The control unit 24 functions in response to the control signal from the control means 23.

For example, when the unmanned craft 20 is an aircraft, the control unit 24 corresponds to unit such as a propeller for flying. Further, when the craft is a land vehicle, the control unit 24 corresponds to unit such as a wheel for travelling.

The designated-area priority maintaining means 25 maintains the information on the prioritized area (the designated-area priority), which is inputted from the control device 10.

The detected area-priority calculation means 26 calculates priority of the area (detected area-priority) based on sensing information acquired by the sensor 27 mounted on the unmanned craft 20. For example, the detected area-priority calculation means 26 calculates the detected area-priority for each sub-area based on the area priority detected by the unmanned craft 20.

The sensor 27 is a unit for acquiring information on the specific area. For example, the sensor 27 is achieved by a camera, an acoustic sensor, a global positioning system (GPS), and the like. Note that the sensor 27 is not particularly limited as long as the sensor 27 can grasp a position of the unmanned craft 20 itself and a positional relationship among the unmanned crafts 20.

The configuration of the unmanned craft group control system according to this example embodiment is thus described above.

### (Operation)

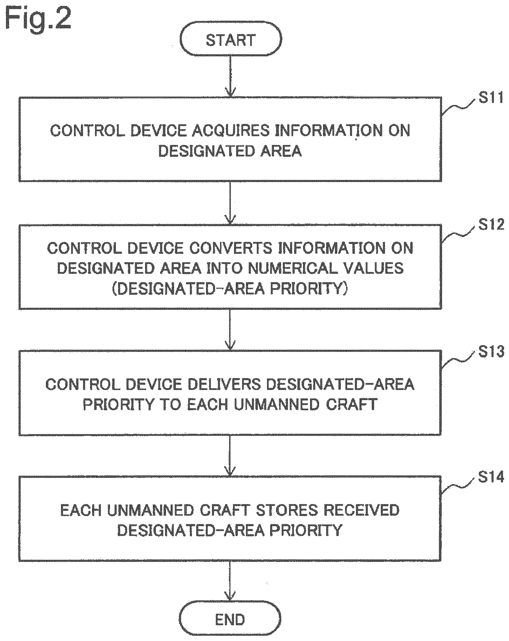

Now, with reference to the drawings, description is made on operations of the unmanned craft group control system according to this example embodiment. Fig. 2 is a flowchart for illustrating an operation of converting the information on the prioritized area, which is inputted to the control device 10, into numerical values and delivering the information converted into the numerical values to each unmanned craft 20.

In Fig. 2, firstly, the control device 10 acquires the information on the designated area, which is inputted to the input means 11 (Step S11).

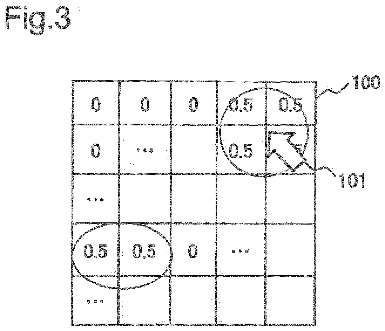

Here, with reference to Fig. 3, description is made on a specific example of Step S11. For example, as in Fig. 3, the control device 10 causes a display device (not shown) to display an interface. On the interface, a specific area 100 being a target of an operation performed by the unmanned craft group is divided into square grids. The control device 10 receives input of a prioritized area in the specific area 100 through a cursor 101 or the like displayed on the interface. In Fig. 3, an area surrounded by the closed curved line corresponds to the prioritized area.

Subsequently, the control device 10 converts the inputted information on the designated area into numerical values (designated-area priority) (Step S12).

Here, referring back to Fig. 3, description is made on a specific example of Step S12. For example, the control device 10 generates a circle, which has a predetermined radius and a point designated by the cursor 101 as a center, on the specific area 100, and increases numerical values (designated-area priority) of sub-areas positioned inside the generated circle. In the example of Fig. 3, the operator increases the numerical values of the designated positions. For example, when the designated-area priority calculation means 12 of the control device 10 increases the designated-area priority of the sub-areas in accordance with the number of times that the sub-areas are designated, it is possible to reflect a prioritization degree conceived by the operator on the designated-area priority.

Subsequently, the control device 10 delivers, to the unmanned crafts, the information on the prioritized area (the designated-area priority), which is converted into the numerical values (Step S13). As a method of delivering the designated-area priority to the unmanned crafts, it is possible to adopt a simultaneous transmission method such as broadcasting, a transmission method achieved with multi-hop among the unmanned crafts 20, and the like, and no particular limitation is given.

When each of the unmanned craft 20 receives the designated-area priority delivered from the control device 10, the unmanned craft 20 stores the received designated-area priority in the designated-area priority maintaining means 25 (Step S14). The information stored in the designated-area priority maintaining means 25 is read at the time of autonomous arrangement control processing to be described later.

The operation of converting the information on the prioritized area, which is inputted to the control device 10, into the numerical values and delivering the information converted into the numerical values to each unmanned craft 20 is thus described above.

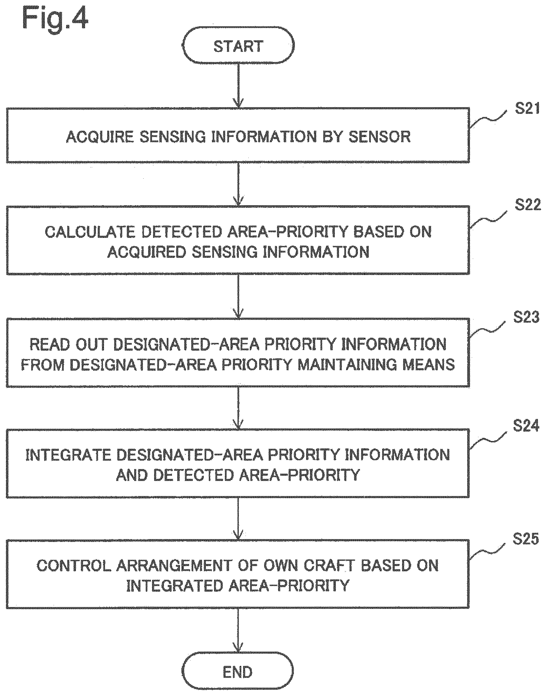

Now, with reference to Fig. 4, description is made on an operation in which the unmanned craft 20 autonomously controls the arrangement. Fig. 4 is a flowchart regarding the operation in which each of the unmanned craft 20 autonomously controls the arrangement.

In Fig. 4, firstly, the unmanned craft 20 acquires the sensing information through use of the sensor 27 mounted on the own craft (Step S21).

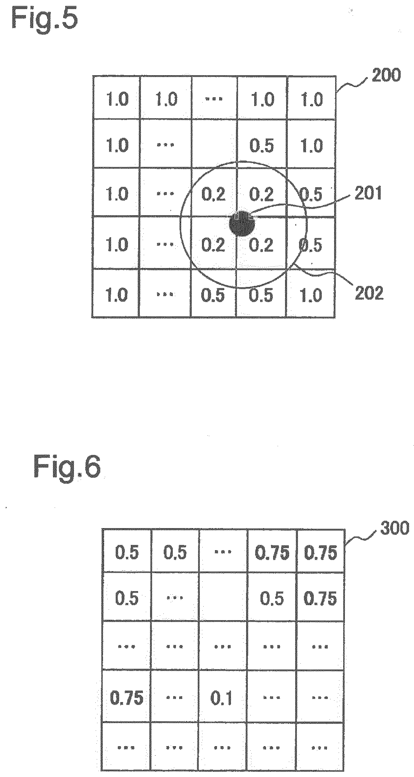

For example, as illustrated in Fig. 5, a specific area 200 for an operation performed by the unmanned craft 20 is defined as a square, and is divided into a plurality of sub-areas in a grid manner. The unmanned craft 20 acquires a position 201 and a sensing range 202 of the own craft as the sensing information.

Subsequently, the unmanned craft 20 calculates the detected area-priority based on the acquired sensing information (Step S22).

For example, as illustrated in Fig. 5, the unmanned craft 20 sets areas in the sensing range 202 to have relatively low priority because the sensing is completed. Further, the unmanned craft 20 sets areas which have not completed the sensing to have relatively high priority.

Subsequently, the unmanned craft 20 reads out the designated-area priority stored in the designated-area priority maintaining means 25 (Step S23).

Subsequently, the unmanned craft 20 integrates the designated-area priority and the detected area-priority (Step S24).

For example, as illustrated in Fig. 6, the unmanned craft 20 calculates an average value of the priority numerical values for each of the corresponding divided areas. Further, the unmanned craft 20 may calculate a weighted average value for each of the divided areas through use of information on weight of the designated-area priority and the detected area-priority. Further, the unmanned craft 20 may determine weight calculated based on an elapsed time from a time at which the designated-area priority is delivered, to thereby calculate an average value.

Further, based on the integrated area-priority, the unmanned craft 20 performs calculation for determining the arrangement of the own craft, and outputs a control signal, which contains information on the control amount for moving to the position, to the control unit 24 (Step S25).

For example, the unmanned craft 20 determines a range where the own craft takes charge based on the positional information of the adjacent unmanned crafts 20 through use of a Voronoi diagram. Further, the unmanned craft 20 may determine the arrangement of the own craft by calculating the area priority in the determined range and an evaluation value calculated by a distance between the area and the own craft. However, the calculation method for the arrangement of the unmanned craft 20 through use of the area priority in this example embodiment is not limited to the method described herein.

### (Effects)

As described above, in this example embodiment, the information on the prioritized area, which is inputted by the operator, and the information on the prioritized area, which is generated from the information sensed by the unmanned craft, are integrated on the unmanned craft side, and the unmanned craft autonomously performs the arrangement control based on the integrated information. In this example embodiment, both the information on the prioritized area, which is inputted by the operator, and the information on the prioritized area, which is generated from the information sensed by the unmanned craft, are converted into numerical values and integrated.

As a result, according to this example embodiment, it is possible to achieve the operation in which the unmanned craft group behaves autonomously by following the situation changes while reflecting the command from the operator when the unmanned crafts are arranged and controlled autonomously in the specific area. In other words, according to this example embodiment, the efficient arrangement control of the operation performed by the plurality of unmanned crafts can be achieved.

### (Second Example Embodiment)

Now, with reference to the drawings, description is made on an unmanned craft group control system (also referred to as a control system) according to a second example embodiment of the present invention. The unmanned craft group control system according to this example embodiment is different from the first example embodiment in that the control device performs the integration of the area priority and the calculation of the control amount for each unmanned craft. In the following description, description for the configurations and operations similar to those in the first example embodiment may be omitted in some cases.

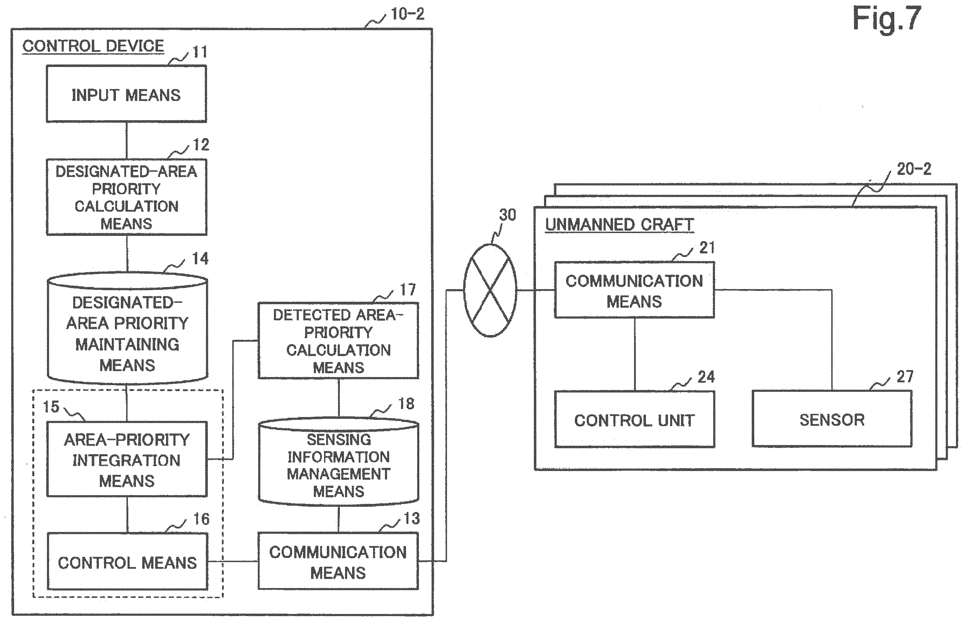

Fig. 7 is a conceptual diagram for illustrating a configuration of the unmanned craft group control system according to this example embodiment. As illustrated in Fig. 7, the unmanned craft group control system according to this example embodiment has a configuration in which a control device 10-2 and at least one unmanned craft 20-2 are connected to each other via the communication network 30.

The control device 10-2 receives input information on a prioritized area, which is inputted by the operator. Further, the control device 10-2 receives sensing information from each unmanned craft 20, and maintains the received sensing information. Further, the control device 10-2 calculates the sensor-based area priority (detected area-priority) from the sensing information. Further, the control device 10-2 calculates integrated area-priority obtained by integrating the detected area-priority, which is calculated, and the designated-area priority. Further, based on the integrated area-priority, which is calculated, the control device 10-2 outputs a control signal for controlling the unmanned craft 20-2 to the unmanned craft 20-2.

The unmanned craft 20-2 transmits the sensing information acquired from the sensor 27 to the control device 10-2, and is controlled in accordance with the control signal from the control device 10-2.

In addition to the input means 11, the designated-area priority calculation means 12, and the communication means 13, the control device 10-2 includes a designated-area priority maintaining means 14, an area-priority integration means 15, a control means 16, a detected area-priority calculation means 17, and a sensing information management means 18.

Operations of the input means 11, the designated-area priority calculation means 12, and the communication means 13 are the same as the means in the first example embodiment, and hence, detailed description therefor is omitted.

The designated-area priority maintaining means 14 is a means for maintaining, on the control device 10-2 side, the numerical value information (designated-area priority) on the priority of the designated area.

The area-priority integration means 15 calculates the integrated area-priority obtained by integrating the area priority (detected area-priority), which is calculated from the sensing information received from each unmanned craft 20-2, and the designated-area priority.

The control means 16 calculates optimum arrangement and control amounts of each unmanned craft 20-2 in the area based on the integrated area-priority.

The detected area-priority calculation means 17 calculates the area priority (the detected area-priority) based on the sensing information acquired from each unmanned craft 20-2.

The sensing information management means 18 saves the sensing information sent from each unmanned craft 20-2.

The unmanned craft 20-2 includes a communication means 21, a control unit 24, and a sensor 27. The operations of components of the unmanned craft 20-2 are similar to those in the first example embodiment, and hence, detailed description therefor is omitted.

The configuration of the unmanned craft group control system according to this example embodiment is thus described above.

### (Operation)

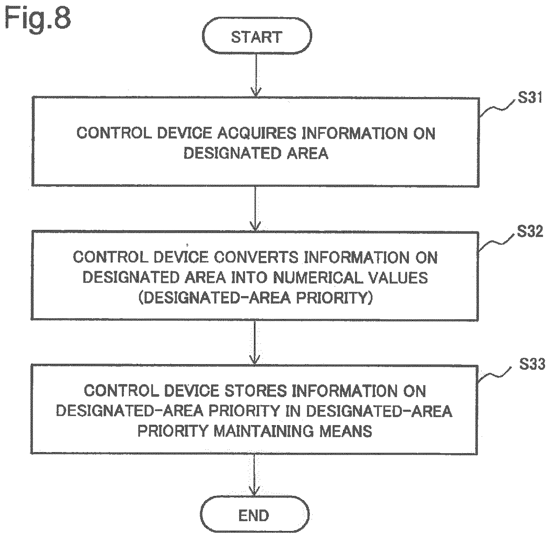

Now, with reference to the drawings, description is made on operations of the unmanned craft group control system according to this example embodiment. Fig. 8 is a flowchart for illustrating an operation of converting the information on the prioritized area, which is inputted to the control device 10-2, into numerical values and maintaining the information converted into the numerical values in the own craft.

In Fig. 8, firstly, the control device 10-2 acquires the information on the prioritized area, which is inputted to the input means 11 (Step S31).

Subsequently, the control device 10-2 converts the information on the prioritized area, which is designated, into the numerical values (designated-area priority) (Step S32).

Further, the control device 10-2 stores the designated-area priority in the designated-area priority maintaining means 14 in the own craft (Step S33).

The operation of converting the information on the prioritized area, which is inputted to the control device 10-2, into the numerical values and maintaining the information converted into the numerical values in the own craft is thus described above.

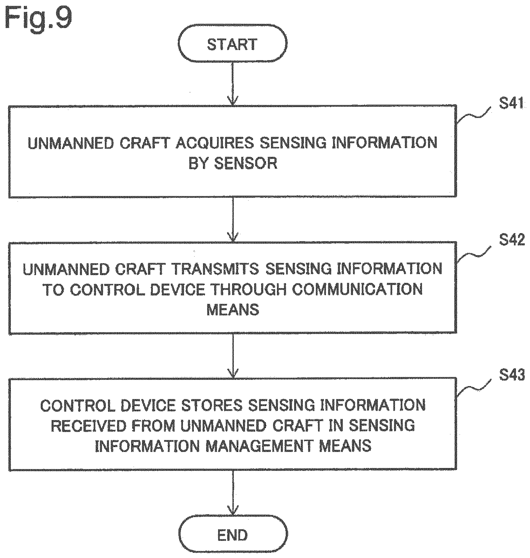

Now, with reference to Fig. 9, description is made on sensing information collection processing in which each unmanned craft 20-2 collect the sensing information and the control device 10-2 stores the collected sensing information.

In Fig. 9, firstly, each unmanned craft 20-2 collect the sensing information through use of the sensors 27 mounted on the own crafts (Step S41).

Subsequently, each unmanned craft 20-2 transmit the sensing information to the control device 10-2 through the communication means 21 (Step S42).

The control device 10-2 stores the sensing information received from the unmanned craft 20-2 in the sensing information management means 18 (Step S43).

The sensing information collection processing in which each unmanned craft 20-2 collect the sensing information and the control device stores the collected sensing information is thus described above.

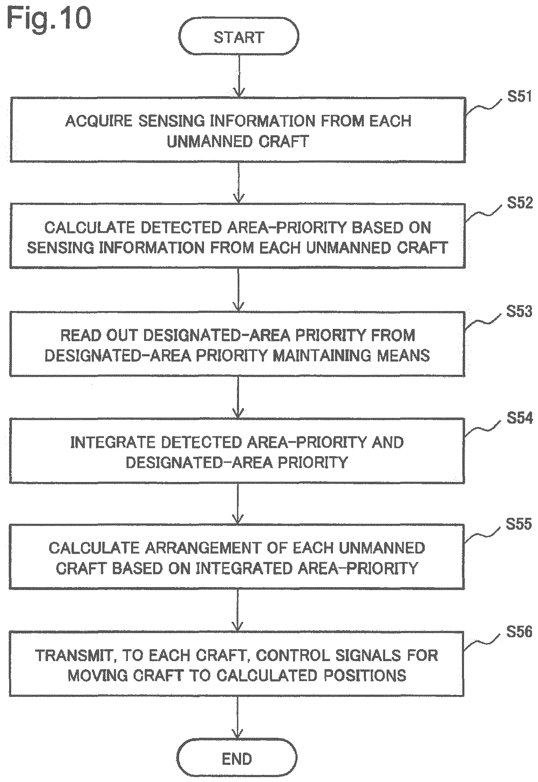

Now, with reference to Fig. 10, description is made on an operation in which the control device 10-2 calculates the integrated area-priority obtained by integrating the detected area-priority and the designated-area priority, and outputs the control signals based on the integrated area-priority, which is calculated, to each unmanned craft 20-2.

Firstly, the control device 10-2 acquires the sensing information of each unmanned craft 20-2 through use of the sensing information management means 18 (Step S51).

Subsequently, the control device 10-2 calculates the detected area-priority through use of the acquired sensing information (Step S52).

Subsequently, the control device 10-2 reads out the designated-area priority from the designated-area priority maintaining means 14 (Step S53).

Further, the control device 10-2 integrates the designated-area priority and the detected area-priority (Step S54).

Further, the control device 10-2 calculates optimum arrangement of each unmanned craft 20-2 based on the integrated area-priority (Step S55).

Further, the control device 10-2 determines control amounts for moving each unmanned craft 20-2 to the calculated positions, and transmits the determined control amounts to each unmanned craft 20-2 (Step S56).

### (Effects)

As described above, in this example embodiment, the information on the prioritized area, which is inputted by the operator, and the information on the prioritized area, which is generated from the information sensed by the unmanned craft, are integrated on the control device side, and the unmanned craft are arranged and controlled based on the integrated information. Also in this example embodiment, similarly to the first example embodiment, both the information on the prioritized area, which is inputted by the operator, and the information on the prioritized area, which is generated from the information sensed by the unmanned craft, are converted into numerical values and integrated.

As a result, according to this example embodiment, similarly to the first example embodiment, it is possible to achieve the operation in which the unmanned craft group behaves autonomously by following the situation changes while reflecting the command from the operator when the unmanned crafts are arranged and controlled autonomously in the specific area.

### (Third Example Embodiment)

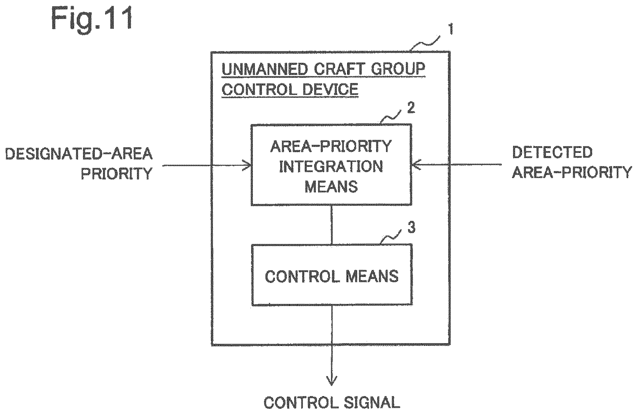

Now, with reference to the drawings, description is made on an unmanned craft group control device (also referred to as a control system) according to a third example embodiment of the present invention. Fig. 11 is a block diagram for illustrating a configuration of an unmanned craft group control device 1 according to this example embodiment. The unmanned craft group control device 1 includes an area-priority integration means 2 and a control means 3.

The unmanned craft group control device 1 according to this example embodiment is a device obtained by abstracting common characteristic functions among the unmanned craft group control systems according to the first example embodiment and the second example embodiment, and is included in the control device or the unmanned craft that configures the unmanned craft group control system according to the first example embodiment or the second example embodiment. In the case of the unmanned craft group control system according to the first example embodiment, the unmanned craft group control device 1 is included in the unmanned craft 20. In the case of the unmanned craft group control system according to the second example embodiment, the unmanned craft group control device 1 is included in the control device 10-2.

The area-priority integration means 2 inputs the designated-area priority and the detected area-priority, and generates the integrated area-priority obtained by integrating the designated-area priority and the detected area-priority.

In the case of the first example embodiment, the area-priority integration means 2 corresponds to the area-priority integration means 22 included in the unmanned craft 20. In the case of the second example embodiment, the area-priority integration means 2 corresponds to the area-priority integration means 15 included in the control device 10-2.

The control means 3 delivers, to the unmanned crafts, the control signals for controlling the unmanned crafts based on the integrated area-priority calculated by the area-priority integration means 2.

In the case of the first example embodiment, the control means 3 corresponds to the control means 23 included in the unmanned craft 20. In the case of the second example embodiment, the control means 3 corresponds to the control means 16 included in the control device 10-2.

Also with this example embodiment, similarly to the first example embodiment and the second example embodiment, it is possible to achieve the operation in which the unmanned craft group behaves autonomously by following the situation changes while reflecting the command from the operator when the unmanned crafts are arranged and controlled autonomously in the specific area.

### (Hardware)

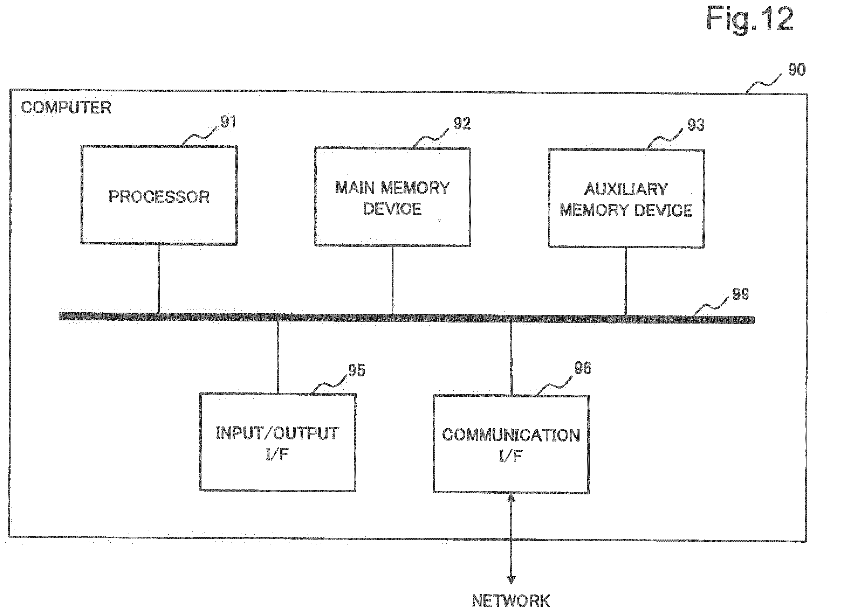

Here, description is made on a hardware configuration that achieves a control system of the unmanned craft group control system according to this example embodiment by exemplifying a computer 90 in Fig. 12. Note that the computer 90 in Fig. 12 is a configuration example for achieving the control system of the unmanned craft group control system according to each of the example embodiments, and is not intended to limit the scope of the present invention.

As described in Fig. 12, the computer 90 includes a processor 91, a main memory device 92, an auxiliary memory device 93, an input/output interface 95, and a communication interface 96. In Fig. 12, the interface is expressed as "I/F" in an abbreviated form. The processor 91, the main memory device 92, the auxiliary memory device 93, the input/output interface 95, and the communication interface 96 are connected to each other via a bus 99 in such a way as to be able to mutually transmit and receive data. Further, the processor 91, the main memory device 92, the auxiliary memory device 93, and the input/output interface 95 are connected to a network such as the Internet and the Intranet through the communication interface 96.

The processor 91 develops a program, which is stored in the auxiliary memory device 93 or the like, in the main memory device 92, and executes the developed program. This example embodiment may have a configuration that uses a software program installed in the computer 90. The processor 91 executes arithmetic processing and control processing that are executed by the control system according to this example embodiment.

The main memory device 92 has a region in which the program is developed. The main memory device 92 may be a volatile memory such as a dynamic random access memory (DRAM). Further, a nonvolatile memory such as a magnetoresistive random access memory (MRAM) may be configured or added as the main memory device 92.

The auxiliary memory device 93 is a means for storing data. The auxiliary memory device 93 is configured by a local disc such as a hard disc and a flash memory. Note that the main memory device 92 may be configured to store the data, and the auxiliary memory device 93 may be omitted.

The input/output interface 95 is a device for connecting the computer 90 and peripherals to each other based on connection standards of the computer 90 and the peripherals. The communication interface 96 is an interface for network connection such as the Internet and the Intranet based on standards and specifications. The input/output interface 95 and the communication interface 96 may be shared as an interface for connecting to external devices.

The computer 90 may be configured so as to be connected with input units such as a keyboard, a mouse, and a touch panel as needed. Those input units are used for inputting information and setting. Note that, in a case where the touch panel is used as an input unit, a display screen of a display unit may have a configuration to also function as an interface of the input unit. Transmission and receipt of the data between the processor 91 and the input unit may be performed through the input/output interface 95.

The communication interface 96 is connected to a system or a device such as another computer and a server through the network.

Further, the computer 90 may be provided with a display unit for displaying information. In the case where the display unit is provided, it is preferred that the computer 90 be provided with a display control device (not shown) for controlling display of the display unit. The display unit may be connected to the computer 90 through the input/output interface 95.

Further, the computer 90 may be provided with a reader/writer as needed. The reader/writer is connected to the bus 99. Between the processor 91 and a recording medium (also referred to as a program recording medium), not shown, the reader/writer mediates reading of data and a program from the recording medium and writing of processing results from the computer 90 to the recording medium, for example. The recording medium may be achieved by a semiconductor recording medium such as a secure digital (SD) card and a universal serial bus (USB) memory. Further, the recording medium may be achieved by a magnetic recording medium such as a flexible disc, an optical recording medium such as a compact disc (CD) and a digital versatile disc (DVD), and other recording media.

The example of the hardware configuration enabling the control system of the unmanned craft group control system according to the example embodiment of the present invention is thus given above. Note that the hardware configuration in Fig. 12 is merely an example of the hardware configuration enabling the control system of the unmanned craft group control system according to each example embodiment of the present invention, and is not intended to limit the scope of the present invention. Further, the program according to this example embodiment, which causes the computer to execute the processing, is included in the scope of the present invention. Moreover, the program recording medium that records the program according to the example embodiment of the present invention is also included in the scope of the present invention.

This application is based upon and claims the benefit of priority from Japanese Patent Application No. 2016-224693, filed on November 18, 2016, the disclosure of which is incorporated herein in its entirety by reference.

### [Reference signs List]

- 10: Control device
- 20: Unmanned craft
- 30: Communication network
- 11: Input means
- 12: Designated-area priority calculation means
- 13: Communication means
- 14: Designated-area priority maintaining means
- 15: Area-priority integration means
- 16: Control means
- 17: Detected area-priority calculation means
- 18: Sensing information management means
- 21: Communication means
- 22: Area-priority integration means
- 23: Control means
- 24: Control unit
- 25: Designated-area priority maintaining means
- 26: Detected area-priority calculation means
- 27: Sensor

## Claims

1. A control system which controls at least one unmanned craft arranged in a specific area, **characterized by** comprising:
area-priority integration means (22; 15) configured to calculate an integrated area-priority by integrating a designated-area priority calculated based on a priority of an externally-designated area that is an operator's input, and a detected area-priority calculated based on sensing information, including a position of the unmanned craft and a sensing range of the unmanned craft, detected by a sensor (27) mounted on the unmanned craft; and
control means (23; 16) configured to determine where the unmanned craft is to be positioned in the specific area based on the integrated area-priority calculated by the area-priority integration means (22; 15), and deliver, to the unmanned craft, a control signal for controlling the unmanned craft to move to a corresponding position.

2. The control system according to claim 1 or 2, further comprising a control device (10; 10-2) including:
input means (11) configured to receive input of information on a priority of a designated area;
designated-area priority calculation means (12) configured to convert information on a priority of an area which is inputted to the input means (11), into the designated-area priority; and
first communication means (13) configured to communicate with the unmanned craft.

3. The control system according to claim 2, wherein the unmanned craft includes:
the sensor (27);
second communication means (21) configured to communicate with the control device; and
a control unit (24) configured to change a position of the craft in response to the control signal from the control means (23).

4. The control system according to claim 3, wherein the unmanned craft includes:
the area-priority integration means (22);
the control means (23);
designated-area priority maintaining means (25) configured to maintain the designated-area priority calculated by the designated-area priority calculation means (12); and
detected area-priority calculation means (26) configured to calculate the detected area-priority from the sensing information acquired by the sensor (27).

5. The control system according to claim 3, wherein the control device (10-2) includes:
the area-priority integration means (15);
the control means (16);
designated-area priority maintaining means (14) configured to maintain the designated-area priority calculated by the designated-area priority calculation means (12);
sensing information management means (18) configured to save the sensing information acquired by the sensor (27); and
detected area-priority calculation means (17) configured to calculate the detected area-priority from information saved in the sensing information management means (18).

6. The control system according to claim 4 or 5, wherein
the input means (11) receives designation of a prioritized area on an interface that displays the specific area divided into a plurality of sub-areas,
the designated-area priority calculation means (12) calculates the designated-area priority for each of the sub-areas designated through the input means,
the detected area-priority calculation means (26; 17) calculates the detected area-priority for each of the sub-areas, based on a priority of an area detected by the unmanned craft, and
the area-priority integration means (22; 15) calculates the integrated area-priority for each of the sub-areas by integrating the designated-area priority calculated by the designated-area priority calculation means (12), and the detected area-priority calculated by the detected area-priority calculation means (26; 17).

7. The control system according to claim 6, wherein
the designated-area priority calculation means (26; 17) increases the designated-area priority of the sub-area according to a number of times that the sub-area is designated.

8. A control method of controlling at least one unmanned craft arranged in a specific area, **characterized by** comprising:
calculating an integrated area-priority by integrating a designated-area priority calculated based on a priority of an externally-designated area that is an operator's input, and a detected area-priority calculated based on sensing information, including a position of the unmanned craft and a sensing range of the unmanned craft, detected by a sensor (27) mounted on the unmanned craft;
determining where the unmanned craft is to be positioned in the specific area based on the calculated integrated area-priority; and
delivering, to the unmanned craft, a control signal for controlling the unmanned craft to move to a corresponding position.

9. A program for controlling at least one unmanned craft, provided with a sensor (27), arranged in a specific area, the program causing a computer to execute the method according to claim 8.

## Patentansprüche

1. Steuersystem, das mindestens ein unbemanntes Fahrzeug steuert, das in einem spezifischen Bereich angeordnet ist, **dadurch gekennzeichnet, dass** es umfasst:
Bereichsprioritätsintegrationsmittel (22; 15), die konfiguriert sind, eine integrierte Bereichspriorität durch Integrieren einer Priorität eines ausgezeichneten Bereichs, die anhand einer Priorität eines extern ausgezeichneten Bereichs, die eine Eingabe einer Bedienperson ist, berechnet wird, und einer Priorität eines detektierten Bereichs, die anhand von Erfassungsinformationen, die eine Position des unbemannten Fahrzeugs und eine Erfassungsreichweite des unbemannten Fahrzeugs enthalten, die durch einen Sensor (27) detektiert werden, der an dem unbemannten Fahrzeug angebracht ist, berechnet wird, zu berechnen; und
Steuermittel (23; 16), die konfiguriert sind, anhand der durch die Bereichsprioritätsintegrationsmittel (22; 15) berechneten integrierten Bereichspriorität zu bestimmen, wo das unbemannte Fahrzeug in dem spezifischen Bereich zu positionieren ist, und an das unbemannte Fahrzeug ein Steuersignal zum Steuern des unbemannten Fahrzeugs, sich zu einer entsprechenden Position zu bewegen, zu liefern.

2. Steuersystem nach Anspruch 1 oder 2, das ferner eine Steuervorrichtung (10; 10-2) umfasst, die Folgendes enthält:
Eingabemittel (11), die konfiguriert sind, eine Eingabe von Informationen über eine Priorität eines ausgezeichneten Bereichs zu empfangen;
Mittel zum Berechnen einer Priorität eines ausgezeichneten Bereichs (12), die konfiguriert sind, Informationen über eine Priorität eines Bereichs, die in die Eingabemittel (11) eingegeben werden, in die Priorität des ausgezeichneten Bereichs umzusetzen; und
erste Kommunikationsmittel (13), die konfiguriert sind, mit dem unbemannten Fahrzeug zu kommunizieren.

3. Steuersystem nach Anspruch 2, wobei das unbemannte Fahrzeug enthält:
den Sensor (27);
zweite Kommunikationsmittel (21), die konfiguriert sind, mit der Steuervorrichtung zu kommunizieren; und
eine Steuereinheit (24), die konfiguriert ist, eine Position des Fahrzeugs als Reaktion auf das Steuersignal von den Steuermitteln (23) zu ändern.

4. Steuersystem nach Anspruch 3, wobei das unbemannte Fahrzeug enthält:
die Bereichsprioritätsintegrationsmittel (22);
die Steuermittel (23);
Mittel zum Führen einer Priorität eines ausgezeichneten Bereichs (25), die konfiguriert sind, die Priorität eines ausgezeichneten Bereichs, die durch die Mittel zum Berechnen einer Priorität eines ausgezeichneten Bereichs (12) berechnet werden, zu führen; und
Mittel zum Berechnen einer Priorität eines detektierten Bereichs (26), die konfiguriert sind, die Priorität des detektierten Bereichs aus den durch den Sensor (27) erfassten Erfassungsinformationen zu berechnen.

5. Steuersystem nach Anspruch 3, wobei die Steuervorrichtung (10-2) enthält:
die Bereichsprioritätsintegrationsmittel (15);
die Steuermittel (16);
Mittel zum Führen einer Priorität eines ausgezeichneten Bereichs (14), die konfiguriert sind, die Priorität eines ausgezeichneten Bereichs, die durch die Mittel zum Berechnen einer Priorität eines ausgezeichneten Bereichs (12) berechnet werden, zu führen;
Erfassungsinformationsmanagementmittel (18), die konfiguriert sind, die durch den Sensor (27) erfassten Erfassungsinformationen zu speichern; und
Mittel zum Berechnen einer Priorität eines detektierten Bereichs (17), die konfiguriert sind, die Priorität eines detektierten Bereichs aus Informationen, die in den Erfassungsinformationsmanagementmitteln (18) gespeichert sind, zu berechnen.

6. Steuersystem nach Anspruch 4 oder 5, wobei
die Eingabemittel (11) eine Bezeichnung eines priorisierten Bereichs auf einer Schnittstelle, die den spezifischen Bereich unterteilt in mehrere Unterbereiche anzeigt, empfangen,
die Mittel zum Berechnen einer Priorität eines ausgezeichneten Bereichs (12) die Priorität eines ausgezeichneten Bereichs für jeden der Unterbereiche, die durch die Eingabemittel ausgezeichnet werden, berechnen,
die Mittel zum Berechnen einer Priorität eines detektierten Bereichs (26; 17) die Priorität eines detektierten Bereichs für jeden der Unterbereiche anhand einer Priorität eines durch das unbemannte Fahrzeug detektierten Bereichs berechnen, und
die Bereichsprioritätsintegrationsmittel (22; 15) die integrierte Bereichspriorität für jeden der Unterbereiche durch Integrieren der Priorität eines ausgezeichneten Bereichs, die durch die Mittel zum Berechnen einer Priorität eines ausgezeichneten Bereichs (12) berechnet werden, und der Priorität eines detektierten Bereichs, die durch die Mittel zum Berechnen einer Priorität eines detektierten Bereichs (26; 17) berechnet werden, berechnen.

7. Steuersystem nach Anspruch 6, wobei
die Mittel zum Berechnen einer Priorität eines ausgezeichneten Bereichs (26; 17) die Priorität eines ausgezeichneten Bereichs des Unterbereichs gemäß einer Häufigkeit, mit der der Unterbereich ausgezeichnet wird, erhöhen.

8. Steuerverfahren zum Steuern mindestens eines unbemannten Fahrzeugs, das in einem spezifischen Bereich angeordnet ist, **dadurch gekennzeichnet, dass** es Folgendes umfasst:
Berechnen einer integrierten Bereichspriorität durch Integrieren einer Priorität eines ausgezeichneten Bereichs anhand einer Priorität eines extern ausgezeichneten Bereichs, die eine Eingabe einer Bedienperson ist, und einer Priorität eines detektierten Bereichs, die anhand von Erfassungsinformationen, die eine Position des unbemannten Fahrzeugs und eine Erfassungsreichweite des unbemannten Fahrzeugs enthalten, die durch einen Sensor (27) detektiert werden, der an dem unbemannten Fahrzeug angebracht ist, berechnet wird;
Bestimmen, wo das unbemannte Fahrzeug in dem spezifischen Bereich zu positionieren ist, anhand der integrierten Bereichspriorität; und
Liefern an das unbemannte Fahrzeug eines Steuersignals zum Steuern des unbemannten Fahrzeugs, sich zu einer entsprechenden Position zu bewegen.

9. Programm zum Steuern mindestens eines unbemannten Fahrzeugs, das mit einem Sensor (27) ausgestattet ist und das in einem spezifischen Bereich angeordnet ist, wobei das Programm bewirkt, dass ein Computer das Verfahren nach Anspruch 8 ausführt.

## Revendications

1. Système de commande qui commande au moins un engin sans pilote disposé dans une zone spécifique, **caractérisé par le fait qu'**il comprend :
des moyens d'intégration d'une priorité de zone (22 ; 15) configurés pour calculer une priorité de zone intégrée en intégrant une priorité de zone désignée calculée sur la base d'une priorité d'une zone désignée extérieurement qui est une entrée de l'opérateur, et une priorité de zone détectée calculée sur la base d'informations de détection, comprenant une position de l'engin sans pilote et une plage de détection de l'engin sans pilote, détectées par un capteur (27) monté sur l'engin sans pilote ; et
des moyens de commande (23 ; 16) configurés pour déterminer l'endroit où l'engin sans pilote doit être positionné dans la zone spécifique sur la base de la priorité de zone intégrée calculée par les moyens d'intégration d'une priorité de zone (22 ; 15), et pour fournir à l'engin sans pilote, un signal de commande pour commander à l'engin sans pilote de se déplacer vers une position correspondante.

2. Système de commande selon la revendication 1 ou 2, comprenant en outre un dispositif de commande (10 ; 10-2) comprenant :
des moyens d'entrée (11) configurés pour recevoir un apport d'informations sur une priorité d'une zone désignée ;
des moyens de calcul de la priorité de zone désignée (12) configurés pour convertir des informations sur une priorité d'une zone qui sont entrées dans les moyens d'entrée (11), dans la priorité de zone désignée ; et
des premiers moyens de communication (13) configurés pour communiquer avec l'engin sans pilote.

3. Système de commande selon la revendication 2, dans lequel l'engin sans pilote comprend :
le capteur (27);
des deuxièmes moyens de communication (21) configurés pour communiquer avec le dispositif de commande ; et
une unité de commande (24) configurée pour modifier une position de l'engin en réponse au signal de commande provenant des moyens de commande (23).

4. Système de commande selon la revendication 3, dans lequel l'engin sans pilote comprend :
les moyens d'intégration de priorité de zone (22) ;
les moyens de commande (23);
des moyens de maintien de la priorité de zone désignée (25) configurés pour maintenir la priorité de zone désignée calculée par les moyens de calcul de la priorité de zone désignée (12) ; et
des moyens de calcul de la priorité de zone détectée (26) configurés pour calculer la priorité de zone détectée à partir des informations de détection acquises par le capteur (27).

5. Système de commande selon la revendication 3, dans lequel le dispositif de commande (10-2) comprend :
les moyens d'intégration de priorité de zone (15) ;
les moyens de commande (16) ;
des moyens de maintien de la priorité de zone désignée (14) configurés pour maintenir la priorité de zone désignée calculée par les moyens de calcul de la priorité de zone désignée (12) ;
des moyens de gestion des informations de détection (18) configurés pour enregistrer les informations de détection acquises par le capteur (27) ; et
des moyens de calcul de la priorité de zone détectée (17) configurés pour calculer la priorité de zone détectée à partir des informations enregistrées dans les moyens de gestion des informations de détection (18).

6. Système de commande selon la revendication 4 ou 5, dans lequel
les moyens d'entrée (11) reçoivent la désignation d'une zone de priorité sur une interface qui affiche la zone spécifique divisée en une pluralité de sous-zones,
les moyens de calcul de la priorité de zone désignée (12) calculent la priorité de zone désignée pour chacune des sous-zones désignées par le biais des moyens d'entrée,
les moyens de calcul de la priorité de zone détectée (26 ; 17) calculent la priorité de zone détectée pour chacune des sous-zones, sur la base d'une priorité d'une zone détectée par l'engin sans pilote, et
les moyens d'intégration de priorité de zone (22 ; 15) calculent la priorité de zone intégrée pour chacune des sous-zones en intégrant la priorité de zone désignée calculée par les moyens de calcul de la priorité de zone désignée (12), et la priorité de zone détectée calculée par les moyens de calcul de la priorité de zone détectée (26 ; 17).

7. Système de commande selon la revendication 6, dans lequel
les moyens de calcul de la priorité de zone désignée (26 ; 17) augmentent la priorité de zone désignée de la sous-zone selon un nombre de fois que la sous-zone est désignée.

8. Procédé de commande pour la commande d'au moins un engin sans pilote disposé dans une zone spécifique, **caractérisé en ce qu'**il comprend :
le calcul d'une priorité de zone intégrée en intégrant une priorité de zone désignée calculée sur la base d'une priorité d'une zone désignée extérieurement qui est une entrée de l'opérateur, et une priorité de zone détectée calculée sur la base d'informations de détection, comprenant une position de l'engin sans pilote et une plage de détection de l'engin sans pilote, détectées par un capteur (27) monté sur l'engin sans pilote ;
le fait de déterminer si l'engin sans pilote doit être positionné dans la zone spécifique sur la base de la priorité de zone intégrée calculée ; et
la fourniture, à l'engin sans pilote, d'un signal de commande pour commander à l'engin sans pilote de se déplacer vers une position correspondante.

9. Programme pour commander au moins un engin sans pilote, doté d'un capteur (27), disposé dans une zone spécifique, le programme entraînant un ordinateur à exécuter le procédé selon la revendication 8.
